# EUROPEAN PATENT SPECIFICATION

(11) **EP 3 330 007 B1**
(45) Date of publication and mention of the grant of the patent: **22.04.2020**
(21) Application number: 16201499.7
(22) Date of filing: 30.11.2016
(51) Int. Cl.: B05B 7/22, B05B 7/14, B05B 13/02, B23K 26/14, B29C 64/153, B29C 64/209, B29C 64/371, B33Y 10/00, B33Y 30/00, B33Y 80/00, B05B 7/08

(54) **NOZZLE APPARATUS FOR DIRECT ENERGY DEPOSITION**
DÜSENVORRICHTUNG ZUR DIRECT ENERGY DEPOSITION
APPAREIL A BUSE POUR LE DEPOT SOUS ENERGIE CONCENTREE

(43) Date of publication of application: 06.06.2018
(73) Proprietor: SUPSI (Scuola Universitaria Della Svizzera Italiana), 6928 Manno (CH)
(72) Inventor: VALENTE, Anna, 6917 Barbengo (CH); BRUGNETTI, Ivan, 6983 Magliaso (CH); MARCHETTI, Andrea, 21051 Arcisate (IT); COLLA, Marco, 6600 Muralto (CH)
(74) Representative: Modiano, Gabriella Diana

(56) References cited:
- CN-U- 202 272 950
- FR-A5- 2 236 351
- US-A- 2 479 507
- US-A1- 2001 008 230

## Description

### Technical Field

This disclosure relates generally to the field of direct energy deposition and, in particular, to nozzle configurations for use in conjunction with laser-based direct material deposition.

### Background

Direct energy deposition manufacturing is a laser-based manufacturing process for producing three dimensional objects. In direct energy deposition manufacturing, an industrial laser beam is used to form successive layers of material to create the object. The manufacturing process may be under the control of computers.

In direct energy deposition manufacturing, a deposition nozzle (alone or as array of multiple nozzles) is used to deliver deposition material to the localized melt pool. The nozzle must provide consistent and accurate control of the deposition material flow in order to have control on the physical properties of the deposited material, surface finish, and efficiency of the process.

Initial nozzles were comprised of coaxial rings, and therefore these nozzles are known as coaxial nozzles. Coaxial nozzles are used for passage of powder and carrier gas, often also for passage of shielding gas, and for cooling purposes. However, over the years the improvement of the nozzles concerned the optimization of the dimensions so as to arrive to smaller dimensions. A first step involved reducing the number of outer rings that resulted in a reduction in the material flow's convergence angle. By reducing this angle, the focal plane was at a greater distance, thereby minimizing the heat transferred by radiation. A greater distance resulted in a decreased efficiency of the manufacturing process as a result of a large dispersion of the material. Such a problem was avoided by designing an internal ring that helped to orientate material flow and reduced the dispersion. US20090095214 discloses a nozzle with 3 rings. The external ring aids in the orientation of the exiting material and the internal ring optimizes the exiting flow.

Further improvement in nozzles are known in general as in WO2014013247 which discloses a machine tool that is arranged to steer an energy source, through a processing head, onto a work-piece. The machine tool may have a clamping mechanism arranged to temporarily receive one of various processing-heads, or other machining heads. Patent document US 2 479 507 discloses a spray gun nozzle in which air for atomizing the coating material and forming the spray into fan shape travels forwardly through a main air passage. A branch thereof carries some of the air into a circular chamber, past a baffle, then through peripherally spaced channels in an inwardly facing flange of the cap, hence into a space between the cap and the tip, and along horn passages to opposed discharge ports. This air is utilized for flattening the spray discharge into fan shape while also improving the atomization. The air to be utilized for the primary atomization continues along a main air passage, until it enters annular space beneath the rearward skirt section of the tip. It then passes through grooves, ports through the tip, and from a chamber between the tip and the cap out an annular discharge port in atomizing relation to the material issuing from the tip.

Patent document FR 2 236 351 discloses an electrostatic gun for powder coating of vehicle panels, with a supply tube for air and another for a mixture of air and powder 8. The electrostatic gun has a front discharge opening which is funnel shaped and partially blocked by a pointed cap to form an annular spray, and has a set of radial air discharge openings behind this region, to form a swirling jet. The openings can be regulated by rotating the front block portion , and another swirling jet is formed by further sloping radial openings which discharge into the annular spray, the second jet system swirling against the direction of the first.

The present disclosure is directed, at least in part, to improving or overcoming one or more aspects of the prior art system.

### Brief Summary of the Invention

A nozzle apparatus for direct energy deposition applications and a nozzle assembly, according to the present invention, have the features set forth in claim 1 and claim 17, respectively. In a first aspect, the present disclosure describes a nozzle apparatus for direct energy deposition applications, the nozzle apparatus being axially elongated along a longitudinal axis (A) and comprising: a continuous deposit material passage for conveying deposit material that has a central axis parallel or coincident to said longitudinal axis (A), the continuous deposit material passage comprising an interface nozzle channel and a nozzle channel provided in a nozzle to convey deposit material therethrough, wherein the nozzle channel is contiguous with the interface nozzle channel; and a continuous shielding gas passage for conveying shielding gas, the continuous shielding gas passage comprising a shielding gas channel and an annular shielding gas passage wherein the annular shielding gas passage has a central axis that is parallel or coincident to said longitudinal axis (A) and communicates with the shielding gas channel and wherein the annular shielding gas passage surrounds the continuous deposit material passage,characterized in that said annular shielding gas passage has a shroud outlet disposed at a distal shroud end of a shroud nozzle, said shroud outlet being formed between an outer edge of a distal nozzle end of the nozzle and an inner edge of the distal shroud end as an annular ring through which the shielding gas exits axially and wraps the deposit material.

Advantageously, in a preferred embodiment, the nozzle apparatus further comprises: an interface nozzle comprising a tube and the interface nozzle channel for conveying deposit material, the interface nozzle channel being disposed in the tube and being contiguous with an interface inlet at a proximal tube end of the tube; an interface shroud removably coupled to the interface nozzle wherein the interface shroud surrounds the tube, the interface shroud having the shielding gas channel for entry of shielding gas; the nozzle that is removably connected to a distal tube end of the tube, the nozzle having the nozzle channel for conveying deposit material wherein the nozzle channel has a nozzle outlet at a distal nozzle end of the nozzle; and the shroud nozzle that is removably connected to the distal end of the interface shroud, the shroud nozzle surrounding the nozzle wherein the annular shielding gas passage for conveying shielding gas is disposed between the shroud nozzle and the nozzle.

In a second aspect, the present disclosure describes a nozzle assembly comprising: a frame having a central body, the central body having a centrally disposed aperture for the passage of a laser beam and a central axis passing through the centre of the aperture; a plurality of arms extending from the central body, each arm having a proximal portion and a distal portion wherein the proximal portion is inclined relative to the central body and the distal portion inclined relative to the proximal portion; a plurality of nozzle apparatuses, the plurality of nozzles apparatuses being radially disposed around the central axis wherein each nozzle apparatus is mounted to a proximal portion of each arm and wherein the longitudinal axis of each nozzle apparatus is inclined relative to central axis.

### Brief Description of the Drawings

The foregoing and other features and advantages of the present disclosure will be more fully understood from the following description of various embodiments, when read together with the accompanying drawings, in which:
Fig. 1 is an isometric view of a nozzle apparatus according to the present disclosure;
Fig. 2 is an exploded view of the nozzle apparatus of Fig. 1;
Fig. 3 is a sectional view of a nozzle apparatus in a first embodiment according to the present disclosure;
Fig. 4 is a sectional view of a nozzle apparatus in a second embodiment according to the present disclosure;
Fig. 5 is a sectional view of a nozzle apparatus in a third embodiment according to the present disclosure;
Fig. 6 is a sectional view of a nozzle apparatus in a fourth embodiment according to the present disclosure;
Fig. 7 is a sectional view of a nozzle apparatus in a fifth embodiment according to the present disclosure;
Fig. 8 is a sectional view of a nozzle apparatus in a sixth embodiment according to the present disclosure;
Fig. 9 is a sectional view of a nozzle apparatus in a seventh embodiment according to the present disclosure;
Fig. 10 is an isometric view of a nozzle assembly according to the present disclosure; and
Fig. 11 is an exploded view of the nozzle assembly of Fig. 10.

### Detailed Description

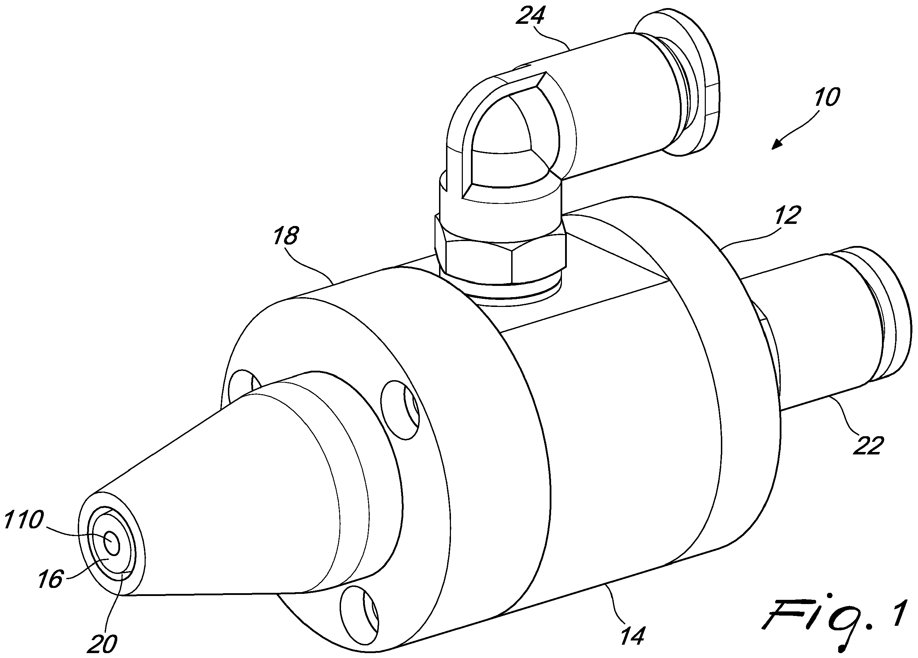

This disclosure generally relates to a nozzle apparatus for additive manufacturing applications. In particular, the nozzle apparatus is intended for direct energy deposition applications. Fig. 1 illustrates a nozzle apparatus **10.** The nozzle apparatus **10** comprises an interface nozzle **12,** an interface shroud **14,** a nozzle **16** and a shroud nozzle **18.** An annular shielding gas passage **20** is disposed in the nozzle apparatus **10.** No laser beam passes through the nozzle apparatus **10.**

In an embodiment, the component parts of the interface nozzle **12,** the interface shroud **14,** the nozzle **16** and the shroud nozzle **18** are produced as a single element to form the nozzle apparatus **10.** In another embodiment, the component parts of the interface nozzle **12** and the nozzle **16** are produced as a first element, and the component parts of the interface shroud **14** and the shroud nozzle **18** are produced as a second element; the first and second elements are mutually connectable to form the nozzle apparatus **10.**

In a preferred embodiment, the component parts of the interface nozzle **12,** the interface shroud **14,** the nozzle **16** and the shroud nozzle **18** are modular and are mutually connectable to form the nozzle apparatus **10.** The component parts are independently removably connected. The annular shielding gas passage **20** is formed through the connection of the component parts.

The interface nozzle **12** may be made of stainless steel. The interface shroud **14** may be made of aluminum. The nozzle **16** may be made of copper. The shroud nozzle **18** may be made of brass, aluminum, or stainless steel.

In an embodiment, the nozzle apparatus **10** further comprises a first standard junction **22** and a second standard junction **24.** The first and second standard junctions **22, 24** are modular and are mutually connectable to the component parts. The first and second standard junctions **22, 24** are independently removably connected. The first and second standard junctions **22, 24** are provided to connect sources of a material or gas supply to the nozzle apparatus.

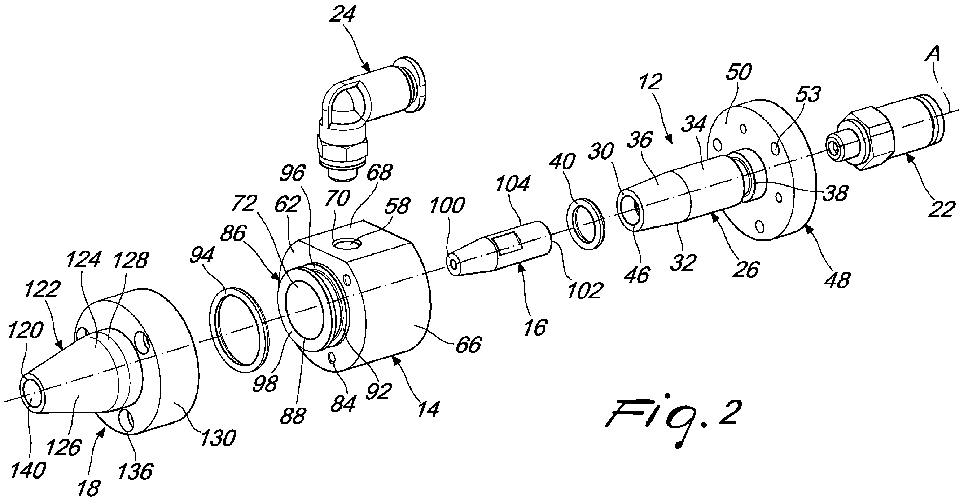

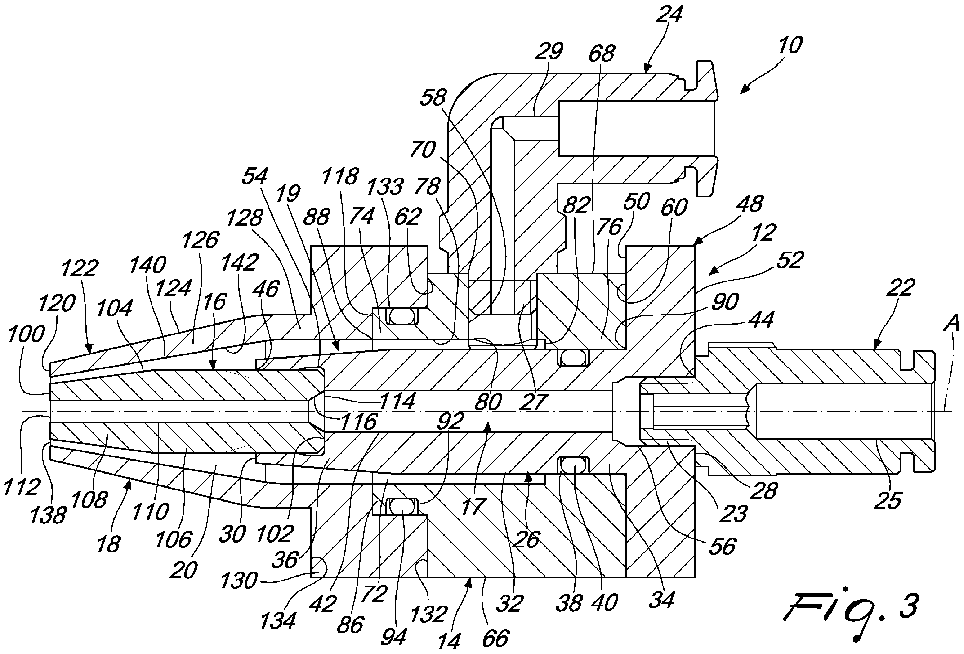

With reference to Figs. 2 and 3, nozzle apparatus **10** is axially elongated along a longitudinal axis **A.** The component parts of the interface nozzle **12,** the interface shroud **14,** the nozzle **16** and the shroud nozzle **18** are mutually axially aligned. The component parts are aligned along the longitudinal axis A.

The interface nozzle **12** receives material for deposition from a supply source. The interface nozzle **12** conveys the deposit material into the nozzle apparatus **10** and promotes a effectively stirred flow of the deposit material.

Interface nozzle **12** comprises a tube **26.** Tube **26** is axially elongated. Tube **26** has a central axis that is substantially parallel to the longitudinal axis **A.** In an embodiment, the central axis of the tube **26** is coincident with the longitudinal axis **A.** Tube **26** has a proximal tube end **28** and a distal tube end **30.** Tube **26** has an external surface **32** extending between the proximal tube end **28** and the distal tube end **30.** External surface **32** encircles tube **26.**

Tube **26** has a tube body portion **34** and a tube cone portion **36.** Tube body portion **34** has a substantially constant diameter. External surface **32** of the tube body portion **34** is substantially parallel to the longitudinal axis **A.** Tube body portion **34** has a substantially cylindrical shape.

Tube cone portion **36** is distally positioned relative to the tube body portion **34.** Tube cone portion **36** decreases in diameter from the tube body portion **34** to the distal tube end **30.** External surface **32** of the tube cone portion **36** is substantially inclined relative to the longitudinal axis **A.** The external surface **32** of the tube cone portion **36** is inclined relative to the external surface **32** of the tube body portion **34.** Tube cone portion **36** has a frustoconical shape.

A groove **38** is disposed on the tube body portion **34.** Groove **38** opens onto the external surface **32.** In an embodiment, groove **38** is disposed towards the proximal tube end **28.** An O-ring **40** is disposed in the groove **38,** in order to avoid any pressure and shielding gas flow losses.

With reference to Fig. 3, the interface nozzle **12** comprises a through interface nozzle channel **42.** Interface nozzle channel **42** serves to convey deposit material through the interface nozzle **12.** Interface nozzle channel **42** is disposed in the tube **26.** Interface nozzle channel **42** extends between the proximal tube end **28** and the distal tube end **30.** Interface nozzle channel **42** is substantially parallel to the longitudinal axis **A.** Interface nozzle channel **42** has a circular cross section.

The interface nozzle **12** comprises an interface inlet **44** at the proximal tube end **28** of the tube **26.** An end of the interface nozzle channel **42** is contiguous with the interface inlet **44.** The interface nozzle **12** comprises an interface outlet **46** at the distal tube end **30** of the tube **26.** An opposite end of the interface nozzle channel **42** is contiguous with the interface outlet **46.** The respective planes of the interface inlet **44** and the interface outlet **46** are mutually parallel. The respective planes of the interface inlet **44** and the interface outlet **46** are substantially parallel to the longitudinal axis **A.** Longitudinal axis **A** passes through the respective centres of the interface inlet **44** and the interface outlet **46.**

In an embodiment, the tube **26** further comprises a first bore **54** disposed at the distal tube end **30** of the tube **26.** First bore **54** is interposed between the interface nozzle channel **42** and the interface outlet **46.** First bore **54** and interface outlet **46** have a larger diameters relative to the interface nozzle channel **42.**

The tube **26** further comprises a second bore **56** disposed at the proximal tube end **28** of the tube **26.** Second bore **56** is interposed between the interface nozzle channel **42** and the interface inlet **44.** Second bore **56** and the interface inlet **44** have a larger diameters relative to the interface nozzle channel **42.** A deposit material supply is removably connected to the second bore **56** through the interface inlet **44.** In an embodiment, the deposit material supply is the first standard junction **22.** First standard junction **22** has a connecting protrusion **23** that is removably inserted into the second bore **56.** A first supply channel **25** is connected to the interface nozzle channel **42.** Deposit material is conveyed from the first supply channel **25** to the interface nozzle channel **42.**

In an embodiment, deposit material is conveyed from the interface inlet **44** to the interface outlet **46** through the interface nozzle channel **42.** In a further embodiment, deposit material is conveyed from the interface inlet **44** to the interface outlet **46** through the second bore **56,** the interface nozzle channel **42** and the first bore **54.**

With reference to Figs. 2 and 3, the interface nozzle **12** further comprises a flange **48.**

Flange **48** extends radially from the tube **26.** Flange **48** extends radially from the external surface **32.** Flange **48** encircles the tube **26.** Flange **48** is substantially perpendicular to the tube **26.** Flange **48** is substantially perpendicular to the tube body portion **34.** Flange **48** is substantially perpendicular to the longitudinal axis **A.**

Flange **48** has a flange proximal surface **52** and a flange distal surface **50.** The flange proximal surface **52** and the flange distal surface **50** are mutually parallel. Flange **48** has threaded holes **53** for removable connection and positioning of the interface shroud **14** and the shroud nozzle **18.**

In an embodiment, flange **48** is positioned at the proximal tube end **28** of the tube **26.** Flange **48** is positioned on the tube body portion **34.** The proximal tube end **28** of the tube **26** is level with the flange proximal surface **52.**

With reference to Figs. 2 and 3, the interface shroud **14** is removably coupled to the interface nozzle **12.** Interface shroud **14** surrounds the tube **26.** In an embodiment, interface shroud **14** is positioned coaxially to the tube **26.** Interface shroud **14** has a shielding gas channel **58** for entry of shielding gas. Shielding gas channel **58** is substantially perpendicular to the longitudinal axis **A.** Interface shroud **14** is removably connected to the flange **48.** In an embodiment, interface shroud **14** is removably coupled to the tube **26.**

Interface shroud **14** has a substantially circular body having a proximal end wall **60,** a distal end wall **62** and an outer surface **66.** Outer surface **66** joins the proximal end wall **60** and the distal end wall **62.** Proximal end wall **60** and distal end wall **62** are mutually parallel. Proximal end wall **60** and distal end wall **62** are substantially perpendicular to the longitudinal axis **A.**

Along a side of the outer surface **66,** interface shroud **14** has a shroud inlet **70.** Shroud inlet **70** provides an opening to the shielding gas channel **58.** Shielding gas channel **58** extends from the shroud inlet **70** to the interface shroud channel **72.** A shielding gas supply is removably connected to the shielding gas channel **58** through the shroud inlet **70.** In an embodiment, the shielding gas supply is the second standard junction **24.** Second standard junction **24** has a connecting protrusion **27** that is removably inserted into the shielding gas channel **58.** A second supply channel **29** is connected to the shielding gas channel **58.** Shielding gas is conveyed from the second supply channel **29** to the shielding gas channel **58.** In a further embodiment, second standard junction **24** is angled, for example L shaped.

In an embodiment, along a side of the outer surface **66,** interface shroud **14** has a planar surface **68** having the shroud inlet **70.** Planar surface **68** is substantially perpendicular to proximal end wall **60** and distal end wall **62.** Plane of shroud inlet **70** is substantially perpendicular to proximal end wall **60** and the distal end wall **62.**

With reference to Fig. 3, the interface shroud **14** comprises a through interface shroud channel **72.** Interface shroud channel **72** extends from the proximal end wall **60** to the distal end wall **62.** Interface shroud channel **72** is substantially transverse to the proximal end wall **60** and the distal end wall **62.** Interface shroud channel **72** extends in a direction substantially parallel to the longitudinal axis **A.** Interface shroud channel **72** is enclosed by an internal surface **78** of the interface shroud **14.** Shielding gas channel **58** extends from the outer surface **66** to the internal surface **78** of the interface shroud **14.** Shielding gas channel **58** extends from the planar surface **68** of the outer surface **66** to the internal surface **78** of the interface shroud **14.** Shielding gas channel **58** has an opening **80** at the internal surface **78** for the communication of the shielding gas channel **58** and the interface shroud channel **72.** Opening **80** is adjacent to the shoulder **82.** Shielding gas is conveyed from the shielding gas channel **58** to the interface shroud channel **72** through the opening **80.**

The interface shroud channel **72** has a first interface portion **74** proximally positioned relative to a second interface portion **76.** First interface portion **74** and second interface portion **76** are contiguous within the interface shroud **14.** First interface portion **74** and second interface portion **76** are mutually coaxial relative to the longitudinal axis **A.** First interface portion **74** inwardly extends from the distal end wall **62.** Second interface portion **76** inwardly extends from the proximal end wall **60.**

The first interface portion **74** has a greater diameter relative to the second interface portion **76.** The first interface portion **74** has a greater diameter relative to the second interface portion **76** in reference to the longitudinal axis **A.** The second interface portion **76** is spaced closer towards the longitudinal axis **A** relative to the first interface portion **74.** Internal surface **78** of the second interface portion **76** is spaced closer towards the longitudinal axis **A** relative to the internal surface **78** of the first interface portion **74.** A shoulder **82** is disposed between the first interface portion **74** and the second interface portion **76.** In an embodiment, the annular shielding gas passage **20** terminates at the shoulder **82.**

The tube **26** of the interface nozzle **12** extends through the interface shroud channel **72.** The first interface portion **74** is radially spaced from the tube **26** and the second interface portion **76** is in contact with the tube **26.** The first interface portion **74** is radially spaced from the external surface **32** of the tube **26.** The first interface portion **74** is radially spaced from the external surface **32** of the tube cone portion **36** and the external surface **32** of the tube body portion **34.** In an embodiment, the first interface portion **74** is radially spaced from the external surface **32** of the tube cone portion **36.** In a further embodiment, the shielding gas channel **58** is disposed in the first interface portion **74.**

The second interface portion **76** is in contact with the external surface **32** of the tube **26.** The second interface portion **76** is in contact with the external surface **32** of the tube body portion **34.** Second interface portion **76** is positioned over the groove **38** and is in sealing contact with the O-ring **40.**

Proximal end wall **60** of the interface shroud **14** is in contact with the flange distal surface **50.** Holes **84** may extend through the interface shroud **14** from the distal end wall **62** to the proximal end wall **60.** Holes **84** are threaded. Holes **84** is aligned with the threaded holes **53** positioned on the flange **48.**

Annular shielding gas passage **20** is partially disposed between the interface shroud **14** and the interface nozzle **12.** Annular shielding gas passage **20** is partially disposed between the internal surface **78** of the interface shroud **14** and the external surface **32** of the tube **26.** Annular shielding gas passage **20** is partially disposed between the internal surface **78** of the first interface portion **74** and the external surface **32** of the tube cone portion **36** and the external surface **32** of the tube body portion **34.** In an embodiment, annular shielding gas passage **20** is partially disposed between the internal surface **78** of the first interface portion **74** and the external surface **32** of the tube cone portion **36.**

With reference to Figs. 2 and 3, the interface shroud **14** further comprises an annular projection **86.** Annular projection **86** extends axially from the distal end wall **62.** Interface shroud channel **72** extends through the annular projection **86.** Annular projection **86** has a first interface opening **88** that provides a distal opening of the interface shroud channel **72.** At the opposite end, the interface shroud **14** has a second interface opening **90** that provides a distal opening of the interface shroud channel **72.** The second interface opening **90** is disposed at the proximal end wall **60.** Interface shroud channel **72** extends between the first interface opening **88** and the second interface opening **90.**

Annular projection **86** has an abutment surface **98** and a side wall **96.** Side wall **96** extends from the abutment surface **98** to the distal end wall **62.** Abutment surface **98** is substantially parallel to the distal end wall **62** and substantially perpendicular to the longitudinal axis **A.** A groove **92** is disposed on the annular projection **86.** Groove **92** opens onto the side wall **96.** An O-ring **94** is disposed in the groove **92,** in order to avoid any pressure and shielding gas flow losses.

With reference to Figs. 2 and 3, the nozzle **16** is removably connected to the distal tube end **30** of the tube **26.** The nozzle **16** receives material for deposition from interface nozzle **12.** Nozzle **16** extends axially from the distal tube end **30.** Nozzle **16** is linearly aligned with the tube **26.** Nozzle **16** has a smaller diameter relative to the tube **26.**

Nozzle **16** is substantially shaped as a tube. Nozzle **16** is axially elongated. Nozzle **16** has a central axis that is substantially parallel to the longitudinal axis **A.** In an embodiment, the central axis of the nozzle **16** is coincident with the longitudinal axis **A.** Nozzle **16** has a proximal nozzle end **102** and a distal nozzle end **100.** Nozzle **16** has an external surface **104** extending between the proximal nozzle end **102** and the distal nozzle end **100.** External surface **104** encircles nozzle **16.**

With reference to Fig. 3, nozzle **16** has a nozzle body portion **106** and a nozzle cone portion **108.** Nozzle body portion **106** has a substantially constant diameter. External surface **104** of the nozzle body portion **106** is substantially parallel to the longitudinal axis A. Nozzle body portion **106** has a substantially cylindrical shape.

Nozzle cone portion **108** is distally positioned relative to the nozzle body portion **106.** Nozzle cone portion **108** decreases in diameter from the nozzle body portion **106** to the distal nozzle end **100.** External surface **104** of the nozzle cone portion **108** is substantially inclined relative to the longitudinal axis **A.** External surface **104** of the nozzle cone portion **108** is inclined relative to the external surface **104** of the nozzle body portion **106.** Nozzle cone portion **108** has a frustoconical shape.

Nozzle **16** comprises a through nozzle channel **110.** Nozzle channel **110** serves to convey deposit material through the nozzle **16.** Nozzle channel **110** extends between the proximal nozzle end **102** and the distal nozzle end **100.** Nozzle channel **110** is substantially parallel to the longitudinal axis **A.** Nozzle channel **110** has a circular cross section. Nozzle channel **110** is contiguous with the interface nozzle channel **42** so as to form a continuous deposit material passage **17.** Continuous deposit material passage **17** serves to convey deposit material through the nozzle apparatus **10.** Continuous deposit material passage **17** comprises the interface nozzle channel **42** and the nozzle channel **110.** Continuous deposit material passage **17** is defined within the interface nozzle channel **42** and the nozzle channel **110.** Continuous deposit material passage **17** is axially elongated. Continuous deposit material passage **17** has a central axis that is substantially parallel to the longitudinal axis **A.** In an embodiment, the central axis of the continuous deposit material passage **17** is coincident with the longitudinal axis A. Deposit material flows along the longitudinal axis **A.** Continuous deposit material passage **17** extends from the proximal tube end **28** of the tube **26** to the distal nozzle end **100** of the nozzle **16.** In an embodiment, the continuous deposit material passage **17** includes the first and second bores **54, 56.**

Nozzle **16** comprises a nozzle inlet **114** at the proximal nozzle end **102.** An end of the nozzle channel **110** is contiguous with the nozzle inlet **114.** The nozzle **16** comprises a nozzle outlet **112** at the distal nozzle end **100.** An opposite end of the nozzle channel **110** is contiguous with the nozzle outlet **112.** The respective planes of the nozzle inlet **114** and the nozzle outlet **112** are mutually parallel. The respective planes of the nozzle inlet **114** and the nozzle outlet **112** are substantially perpendicular to the longitudinal axis **A.** Longitudinal axis A passes through the respective centres of the nozzle inlet **114** and the nozzle outlet **112.**

In an embodiment, the proximal nozzle end **102** is removably inserted into the first bore **54** through the interface outlet **46.** Proximal nozzle end **102** has a diameter that is smaller relative to the diameter of the first bore **54.** In an embodiment, proximal nozzle end **102** is form fitted into the first bore **54.** In a further embodiment, proximal nozzle end **102** is removably threaded into the first bore **54.** The proximal nozzle end **102** and the first bore **54** are provided with screw threads.

In an embodiment, the nozzle channel **110** has a smaller diameter relative to the interface nozzle channel **42.** The nozzle inlet **114** of the nozzle **16** has the same diameter as the interface nozzle channel **42.** The nozzle **16** has a channel transition **116.** Channel transition **116** is disposed at the proximal end **102.** Channel transition **116** is interposed between the nozzle inlet **114** and the nozzle channel **110.** Channel transition **116** decreases in diameter from the nozzle inlet **114** to the nozzle channel **110.** Channel transition **116** has a frustoconical shape.

With reference to Figs. 2 and 3, shroud nozzle **18** is removably connected to the interface shroud **14.** Shroud nozzle **18** is removably connected to the distal end of the interface shroud **14.** Shroud nozzle **18** extends axially from the distal end of the interface shroud **14.** Shroud nozzle **18** conveys shielding gas from the interface shroud **14** to the exterior of the nozzle apparatus **10.** Shroud nozzle **18** is linearly aligned with the interface shroud **14.**

Shroud nozzle **18** comprises a body **122.** Body **122** is axially elongated. Body **122** has a central axis that is substantially parallel to the longitudinal axis **A.** In an embodiment, the central axis of the body **122** is coincident with the longitudinal axis **A.** Body **122** has a proximal shroud end **118** and a distal shroud end **120.** Body **122** has an outer surface **124** extending between the proximal shroud end **118** and the distal shroud end **120.** Outer surface **124** encircles body **122.** Proximal shroud end **118** is in abutting contact with the abutment surface **98** of the annular projection **86.**

Shroud nozzle **18** comprises a shroud base portion **128** and a shroud cone portion **126.** Body **122** has the shroud base portion **128** and the shroud cone portion **126.** Shroud base portion **128** has a substantially constant diameter. Outer surface **124** of the shroud base portion **128** is substantially parallel to the longitudinal axis **A.** Shroud base portion **128** has a substantially cylindrical shape.

Shroud cone portion **126** is distally positioned relative to the shroud base portion **128.** Shroud cone portion **126** decreases in diameter from the shroud base portion **128** to the proximal shroud end **118.** Outer surface **124** of the shroud cone portion **126** is substantially inclined relative to the longitudinal axis **A.** The outer surface **124** of the shroud cone portion **126** is inclined relative to the outer surface **124** of the shroud base portion **128.** Shroud cone portion **126** has a frustoconical shape.

Shroud nozzle **18** further comprises a rim **130.** Rim **130** extends radially from the body **122.** Rim **130** extends radially from the shroud base portion **128.** Rim **130** extends radially from the outer surface **124.** Rim **130** encircles the body **122.** Rim **130** is substantially perpendicular to the shroud base portion **128.** Rim **130** is substantially perpendicular to the longitudinal axis **A.**

Rim **130** has a rim proximal surface **132** and a rim distal surface **134.** The rim proximal surface **132** and the rim distal surface **134** are mutually parallel. Rim **130** has holes **136** for removable connection and positioning of the shroud nozzle **18** to the interface nozzle **12.** Holes **136** extend from the rim proximal surface **132** to the rim distal surface **134.** Holes **136** are aligned with the holes **84** positioned on the interface shroud **14** and with the threaded holes **53** positioned on the flange **48** of the interface nozzle **12.** Holes **136** serve for removably connecting the shroud nozzle **18** to the flange **48** through the interface shroud **14.** In an embodiment, holes **136** are threaded holes.

In an embodiment, rim **130** is positioned at the proximal shroud end **118** of the shroud nozzle **18.** Rim **130** is positioned on the shroud base portion **128.** Rim proximal surface **132** is spaced from the proximal shroud end **118** so as to form an annular shoulder **133.** Rim proximal surface **132** is in abutting contact with the distal end wall **62** of the interface shroud **14.** Annular shoulder **133** is in abutting contact with the side wall **96** of the annular projection **86.** Annular shoulder **133** is positioned over the groove **92** and is in sealing contact with the O-ring **94.**

Shroud nozzle **18** surrounds the nozzle **16.** Shroud nozzle **18** surrounds the interface nozzle **12.** Shroud nozzle **18** surrounds the interface junction of the nozzle **16** and the interface nozzle **12.** In an embodiment, shroud nozzle **18** extends from the interface nozzle **12** and extends over the nozzle **16.**

Annular shielding gas passage **20** serves to convey shielding gas. Annular shielding gas passage **20** is partially disposed between the shroud nozzle **18** and the nozzle **16.** Annular shielding gas passage **20** is partially disposed between the internal surface **142** of the shroud nozzle **18** and the external surface **104** of the nozzle **16.** Annular shielding gas passage **20** is axially elongated. Annular shielding gas passage **20** has a central axis that is substantially parallel to the longitudinal axis **A.** In an embodiment, the central axis of the annular shielding gas passage **20** is coincident with the longitudinal axis **A.** The annular shielding gas passage **20** surrounds the continuous deposit material passage **17.**

Annular shielding gas passage **20** has a shroud outlet **138** disposed at the distal shroud end **120** of the shroud nozzle **18.** Shroud outlet **138** is formed between the outer edge of the distal nozzle end **100** and the inner edge of the distal shroud end **120.** Shroud outlet **138** is formed as an annular ring. Shielding gas may pass through the shielding gas channel **58** and the annular shielding gas passage **20** and exit through the shroud outlet **138.** Shroud cone portion **126** decreases in diameter from the shroud base portion **128** to the shroud outlet **138.**

Annular shielding gas passage **20** communicates with the shielding gas channel **58** so as to form a continuous shielding gas passage **19.** Continuous shielding gas passage **19** serves to convey shielding gas through the nozzle apparatus **10.** Continuous shielding gas passage **19** comprises the shielding gas channel **58** and the annular shielding gas passage **20.** Continuous shielding gas passage **19** is defined within the shielding gas channel **58** and the annular shielding gas passage **20.** Continuous shielding gas passage **19** extends from the shroud inlet **70** of the interface shroud **14** to the distal shroud end **120** of the shroud nozzle **18.**

With reference to Fig. 3, the shroud nozzle **18** comprises a through shroud nozzle channel **140.** Shroud nozzle channel **140** extends from the rim proximal surface **132** to the distal shroud end **120.** Shroud nozzle channel **140** is substantially transverse to the rim proximal surface **132** and the rim distal surface **134.** Shroud nozzle channel **140** extends in a direction substantially parallel to the longitudinal axis A. Shroud nozzle channel **140** in the shroud base portion **128** has a constant diameter. Shroud nozzle channel **140** in the shroud cone portion **126** has a decreasing diameter from the shroud base portion **128** to the shroud outlet **138.**

Shroud nozzle channel **140** is enclosed by an internal surface **142** of the shroud nozzle **18.** Internal surface **142** of the shroud base portion **128** is substantially parallel to the longitudinal axis **A.** Shroud base portion **128** has a substantially cylindrical shape. Internal surface **142** of the shroud cone portion **126** is substantially inclined relative to the longitudinal axis **A.** Internal surface **142** of the shroud cone portion **126** is inclined relative to the internal surface **142** of the shroud base portion **128.** Shroud cone portion **126** has a frustoconical shape.

A portion of the tube **26** of the interface nozzle **12** extends through the shroud nozzle channel **140.** A portion of the tube **26** extends through the shroud base portion **128.** Shroud base portion **128** is radially spaced from the tube **26.** Internal surface **142** of the shroud base portion **128** is radially spaced from the external surface **32** of the tube **26.** Internal surface **142** of the shroud base portion **128** is radially spaced from the external surface **32** of the tube cone portion **36.** Annular shielding gas passage **20** extends between the internal surface **142** of the shroud base portion **128** and the external surface **32** of the tube cone portion **36.**

Nozzle **16** extends from the tube **26** through the shroud nozzle channel **140.** Nozzle **16** extends through the shroud base portion **128** and the shroud cone portion **126.** The shroud base portion **128** and the shroud cone portion **126** are radially spaced from the nozzle **16.** The internal surface **142** of the shroud nozzle **18** is radially spaced from the external surface **104** of the nozzle **16.** The internal surface **142** of the shroud cone portion **126** is substantially parallel to the external surface **104** of the nozzle cone portion **108.** Annular shielding gas passage **20** extends between the internal surface **142** of the shroud nozzle channel **140** and the external surface **104** of the nozzle **16** to the shroud outlet **138.**

With reference to Fig. 3, in a first embodiment, the distal nozzle end **100** is level with the distal shroud end **120.** The nozzle outlet **112** is level with the shroud outlet **138.** Nozzle outlet **112** is aligned with the shroud outlet **138** along a direction substantially transverse to the longitudinal axis **A.**

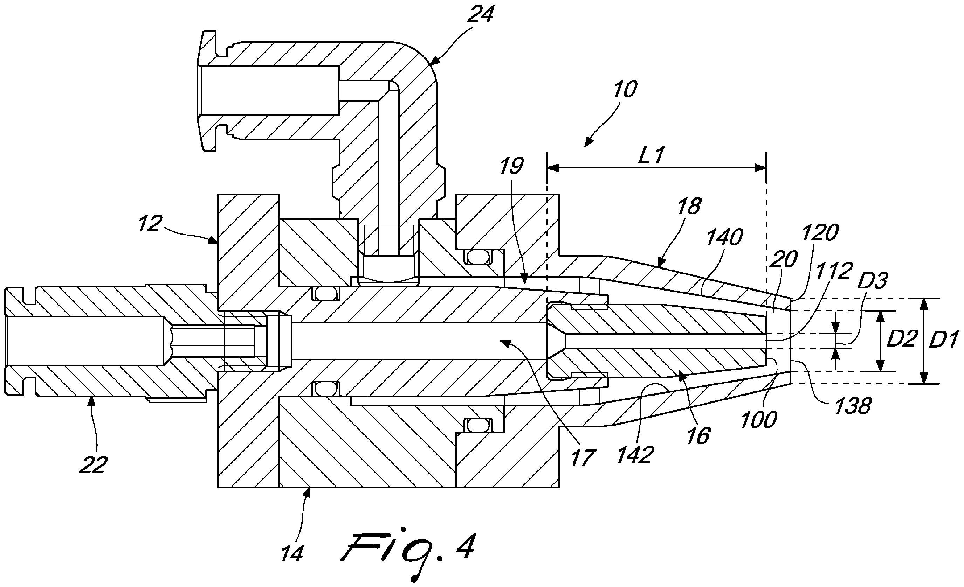

With reference to Fig. 4, in a second embodiment, the distal nozzle end **100** is not level with the distal shroud end **120.** Distal nozzle end **100** is inwardly spaced in the shroud nozzle channel **140** from the distal shroud end **120.** Distal shroud end **120** is distally disposed from the distal nozzle end **100** along the longitudinal axis **A.** Shroud outlet **138** is distally disposed from nozzle outlet **112** along the longitudinal axis **A.** Annular shielding gas passage **20** extends beyond the nozzle **16.** Between the distal shroud end **120** and the distal nozzle end **100,** the annular shielding gas passage **20** is formed by the internal surface **142** of the shroud nozzle **18.** Distal shroud end **120** has a diameter **D1** of 7mm. Shroud outlet **138** has a diameter **D2** of 5mm. Nozzle **16** has a length **L1** of 18mm. Nozzle outlet **112** has a diameter **D3** of 1.2mm.

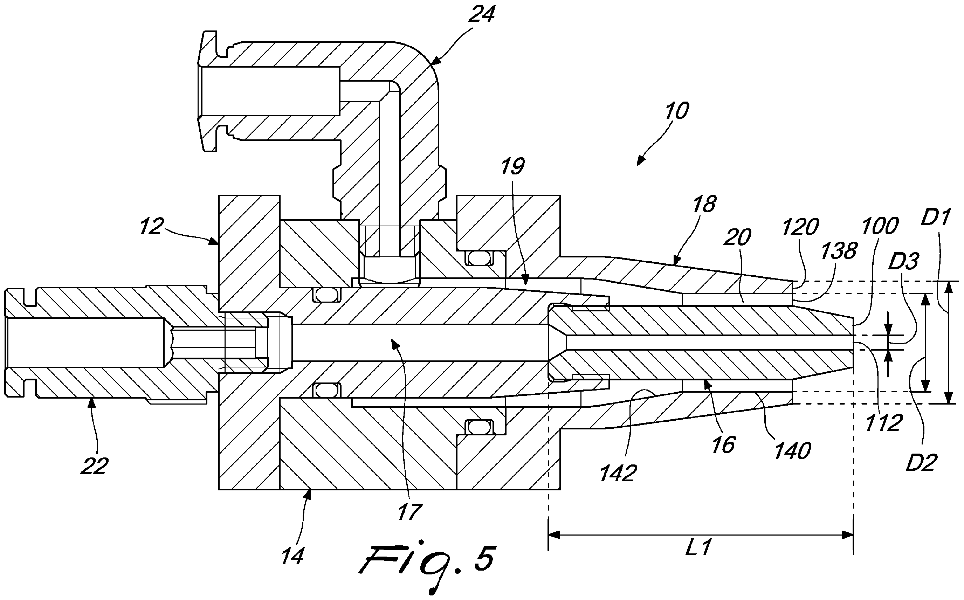

With reference to Fig. 5, in a third embodiment, the distal nozzle end **100** is not level with the distal shroud end **120.** Distal nozzle end **100** is outwardly spaced from the distal shroud end **120.** Distal nozzle end **100** extends externally from the shroud nozzle channel **140.** Distal shroud end **120** is proximally disposed from the distal nozzle end **100** along the longitudinal axis **A.** Shroud outlet **138** is proximally disposed from nozzle outlet **112** along the longitudinal axis **A.** Annular shielding gas passage **20** terminates at the shroud outlet **138.** Shroud outlet **138** is positioned at the junction of the nozzle cone portion **108** and the nozzle body portion **106.** Distal shroud end **120** has a diameter **D1** of 10mm. Shroud outlet **138** has a diameter **D2** of 8mm. Nozzle **16** has a length **L1** of 25mm. Nozzle outlet **112** has a diameter **D3** of 1.2mm.

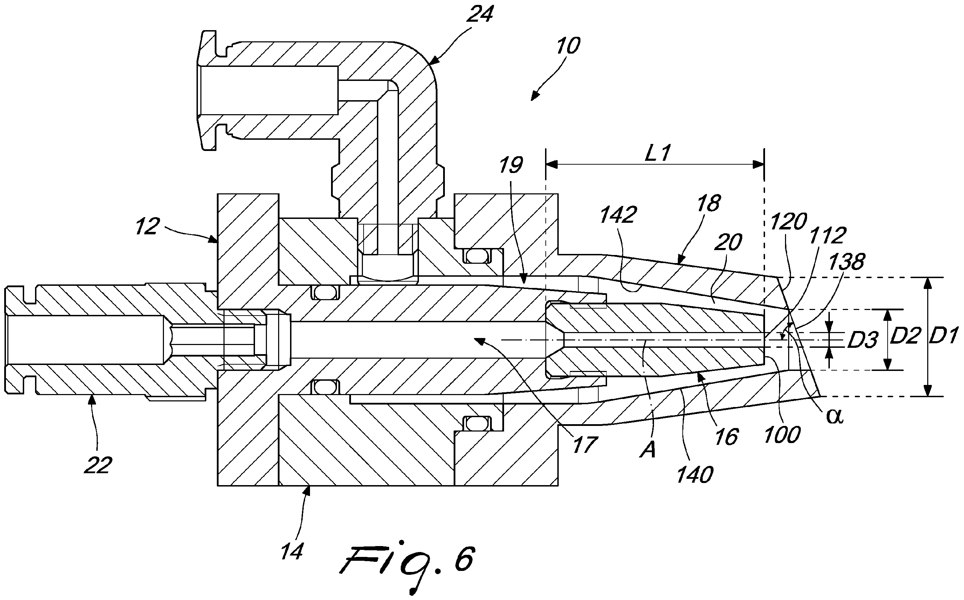

With reference to Fig. 6, in a fourth embodiment, the distal shroud end **120** is inclined relative to the distal nozzle end **100.** Distal shroud end **120** is inclined relative to the distal nozzle end **100** by an angle of 20 degrees. Distal shroud end **120** is inclined relative to the longitudinal axis **A** by an angle **α** of 70 degrees. Shroud outlet **138** is inclined relative to the nozzle outlet **112** by an angle of 20 degrees. Shroud outlet **138** is inclined relative to the longitudinal axis **A** by an angle **α** of 70 degrees.

Distal nozzle end **100** is inwardly spaced in the shroud nozzle channel **140** from the distal shroud end **120.** Distal shroud end **120** is distally disposed from the distal nozzle end **100** along the longitudinal axis **A.** Shroud outlet **138** is distally disposed from nozzle outlet **112** along the longitudinal axis **A.** Annular shielding gas passage **20** extends beyond the nozzle **16.** Between the distal shroud end **120** and the distal nozzle end **100,** the annular shielding gas passage **20** is formed by the internal surface **142** of the shroud nozzle **18.** Distal shroud end **120** has a diameter **D1** of 10mm. Shroud outlet **138** has a diameter **D2** of 5mm. Nozzle **16** has a length **L1** of 18mm. Nozzle outlet **112** has a diameter **D3** of 1.2mm.

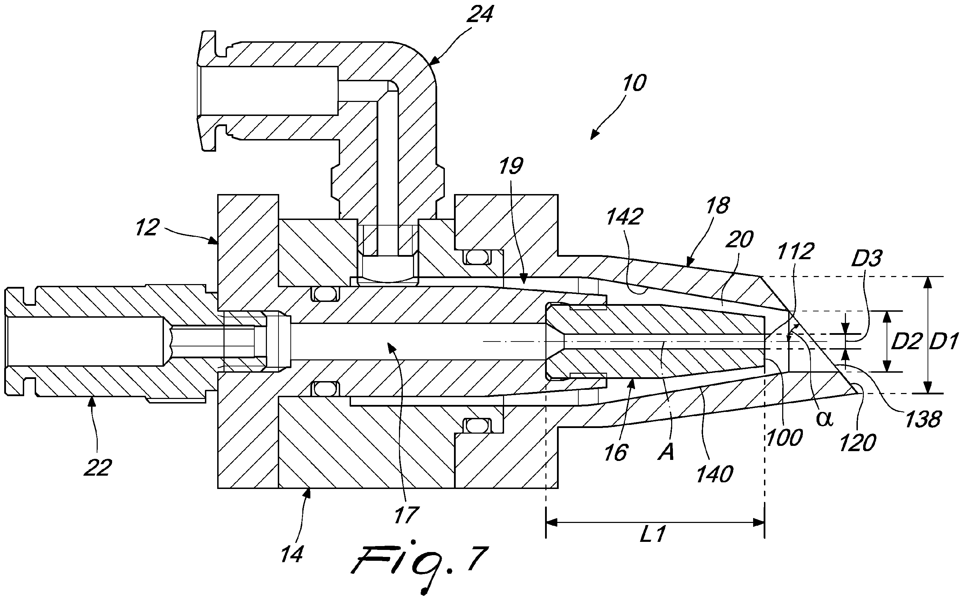

With reference to Fig. 7, in a fifth embodiment, the distal shroud end **120** is inclined relative to the distal nozzle end **100.** Distal shroud end **120** is inclined relative to the distal nozzle end **100** by an angle of 40 degrees. Distal shroud end **120** is inclined relative to the longitudinal axis **A** by an angle **α** of 50 degrees. Shroud outlet **138** is inclined relative to the nozzle outlet **112** by an angle of 40 degrees. Shroud outlet **138** is inclined relative to the longitudinal axis **A** by an angle **α** of 50 degrees.

Distal nozzle end **100** is inwardly spaced in the shroud nozzle channel **140** from the distal shroud end **120.** Distal shroud end **120** is distally disposed from the distal nozzle end **100** along the longitudinal axis **A.** Shroud outlet **138** is distally disposed from nozzle outlet **112** along the longitudinal axis **A.** Annular shielding gas passage **20** extends beyond the nozzle **16.** Between the distal shroud end **120** and the distal nozzle end **100,** the annular shielding gas passage **20** is formed by the internal surface **142** of the shroud nozzle **18.** Distal shroud end **120** has a diameter **D1** of 10mm. Shroud outlet **138** has a diameter **D2** of 5mm. Nozzle **16** has a length **L1** of 18mm. Nozzle outlet **112** has a diameter **D3** of 1.2mm.

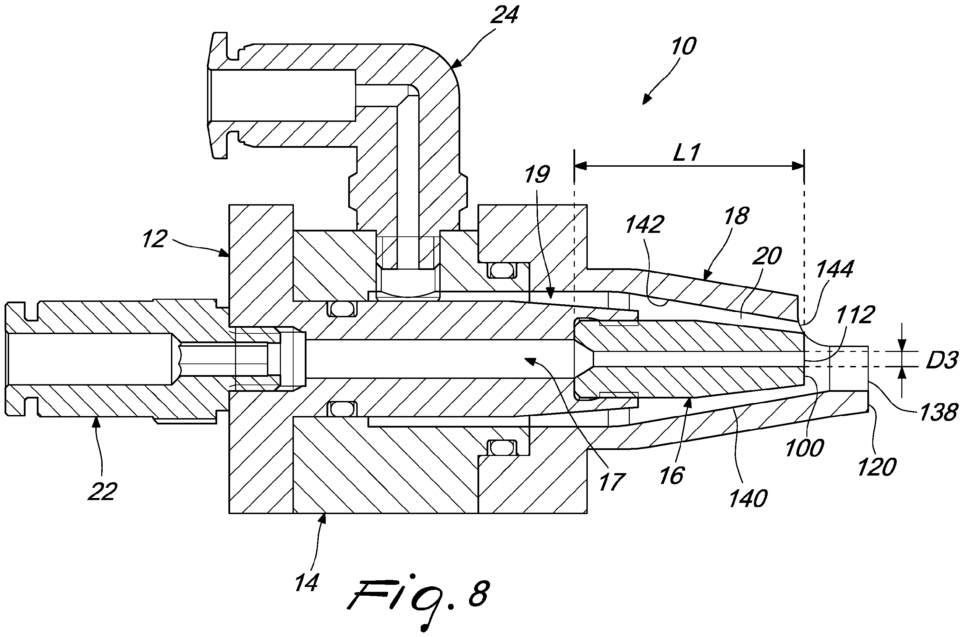

With reference to Fig. 8, in a sixth embodiment, the distal nozzle end **100** is not level with the distal shroud end **120.** Distal shroud end **120** has a cutaway portion **144.** Cutaway portion has a fully parameterizable radius dependently to the specific needs. Distal nozzle end **100** is inwardly spaced in the shroud nozzle channel **140** from the distal shroud end **120.** Distal nozzle end **100** is partially exposed in the shroud nozzle channel **140** at the cutaway portion **144.** Distal shroud end **120** is distally disposed from the distal nozzle end **100** along the longitudinal axis **A.** Shroud outlet **138** is distally disposed from nozzle outlet **112** along the longitudinal axis **A.** Annular shielding gas passage **20** extends beyond the nozzle **16.** Between the distal shroud end **120** and the distal nozzle end **100,** the annular shielding gas passage **20** is formed by the internal surface **142** of the shroud nozzle **18** adjacent the cutaway portion **144.** Nozzle **16** has a length **L1** of 18mm. Nozzle outlet **112** has a diameter **D3** of 1.2mm.

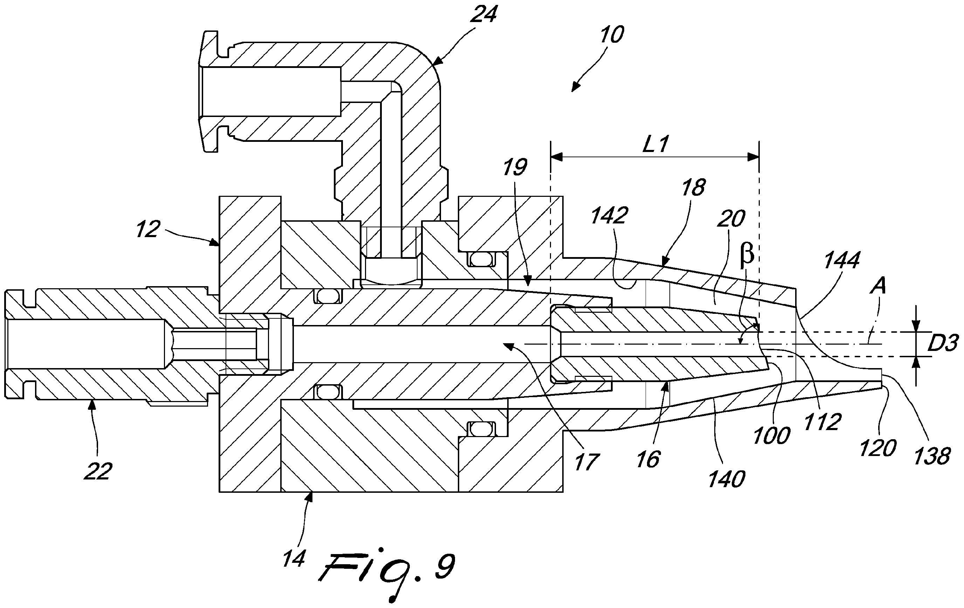

With reference to Fig. 9, in a seventh embodiment, the distal shroud end **120** has a cutaway portion **144.** Cutaway portion has a fully parameterizable radius dependently to the specific needs. Distal nozzle end **100** is inwardly spaced in the shroud nozzle channel **140** from the distal shroud end **120** and the cutaway portion **144.** Distal shroud end **120** is distally disposed from the distal nozzle end **100** along the longitudinal axis **A.** Shroud outlet **138** is distally disposed from nozzle outlet **112** along the longitudinal axis **A.** A portion of the annular shielding gas passage **20** extends beyond the nozzle **16.** Between the distal shroud end **120** and the distal nozzle end **100,** the portion of the annular shielding gas passage **20** is formed by the internal surface **142** of the shroud nozzle **18** adjacent the cutaway portion **144.**

Distal nozzle end **100** is inclined relative to the longitudinal axis A. Distal nozzle end **100** is inclined relative to the longitudinal axis **A** by an angle **β** of 70 degrees. Nozzle **16** has a length **L1** of 18mm. Nozzle outlet **112** has a diameter **D3** of 2mm.

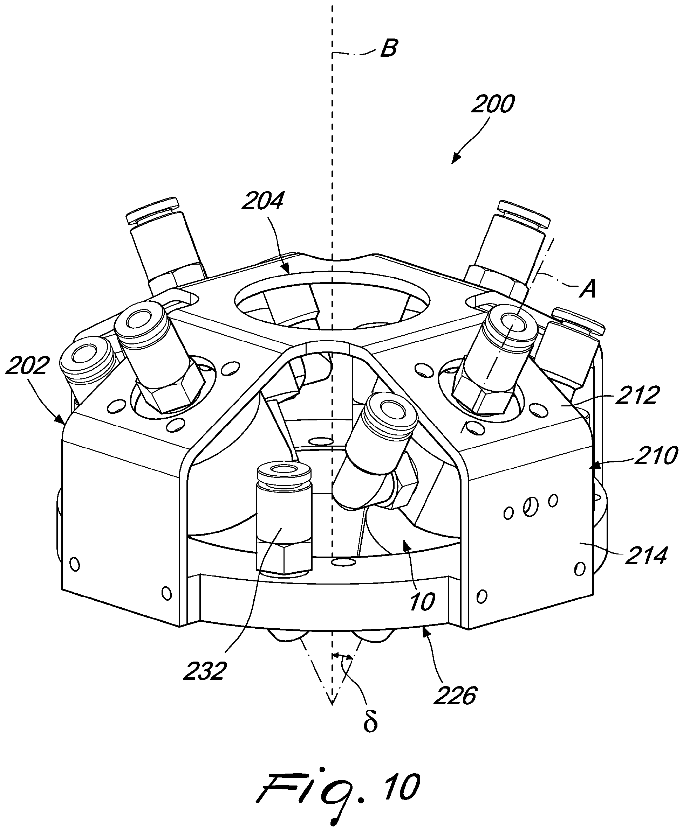

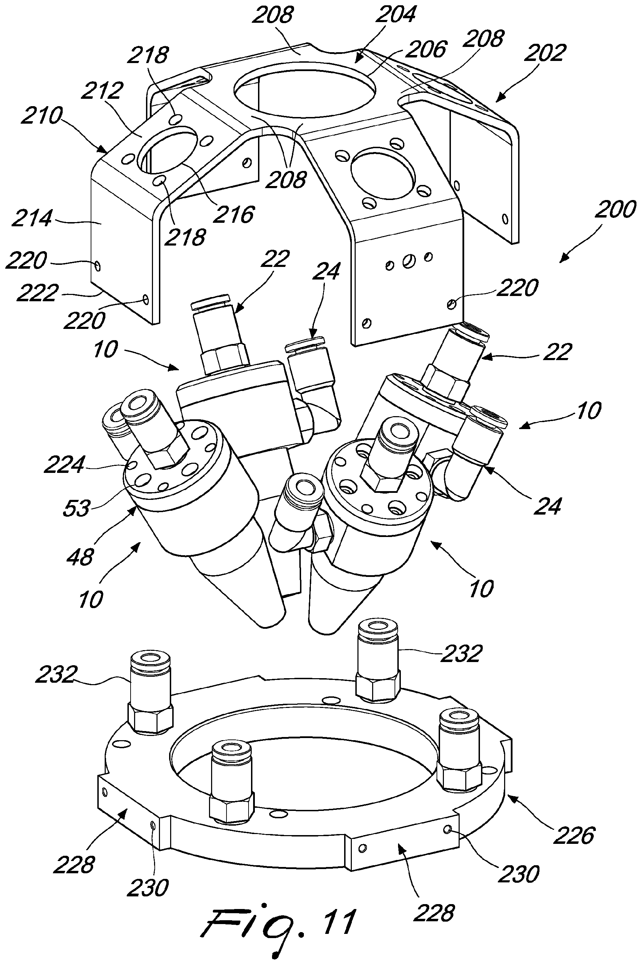

With reference to Figs. 10 and 11, a nozzle assembly **200** comprises a frame **202** having a central body **204.** The central body **204** is planar. The central body **204** has an aperture **206.** Aperture **206** is centrally disposed in the central body **204.** Aperture **206** pass through the central body **204.** A central axis **B** passes through the centre of the aperture **206.** A laser beam may pass through the aperture **206.** The laser beam has a longitudinal axis that is substantially parallel to the central axis **B.** In an embodiment, the longitudinal axis of the laser beam is coincident with the central axis **B.** The size of the aperture **206** can vary from a couple of millimetres, enough for the laser beam only, to various centimetres, to lighten the frame **202** and in particular the central body **204.** Central body **204** has lateral extensions **208.** Lateral extensions **208** are radially disposed about the aperture **206.** Lateral extensions **208** are radially disposed about the central axis **B.** Lateral extensions **208** are mutually angularly spaced about the central axis **B.** The angular spacing between the lateral extensions **208** are equal. Lateral extensions **208** are provided on the peripheral sides of the central body **204.** In an embodiment, central body **204** is cross-shaped. Central body **204** has four sides. Central body **204** has four lateral extensions **208.**

A plurality of arms **210** extend from the central body **204.** Each arm **210** is joined to a side of the central body **204.** Arms **210** are radially disposed about the aperture **206.** Arms **210** are radially disposed about the central axis **B.** Arms **210** are mutually angularly spaced about the central axis **B.** The angular spacing between the arms **210** are equal.

In an embodiment, each arm **210** is joined to a lateral extensions **208.** Each arm having a proximal portion **212** and a distal portion **214.** Each proximal portion **212** and distal portion **214** are planar. Each proximal portion **212** is interposed between the central body **204** and the respective distal portion **214.** In an embodiment, the proximal portion **212** is joined to a respective lateral extensions **208.**

Each proximal portion **212** is joined to a side of the central body **204.** The proximal portion **212** has an arm opening **216.** Arm opening **216** is centrally disposed in the proximal portion **212.** Arm opening **216** passes through the proximal portion **212.** The proximal portion **212** has a plurality of holes **218.** Plurality of holes **218** are radially disposed about opening **216.** Holes **216** are mutually angularly spaced about the centre of arm opening **216.** The angular spacing between the holes **218** are equal. The proximal portion **212** is inclined relative to the central body **204.** The proximal portions **212** are inclined towards a common direction. The proximal portions **212** are inclined relative to central axis **B** by an angle of between 5 and 85 degrees, preferably between 40 and 60 degrees. Plurality of holes **218** are through holes.

Each distal portion **214** is joined to a side of the respective proximal portion **212** opposed to the side joined to the central body **204.** The distal portion **214** has a plurality of mounting holes **220.** The mounting holes **220** are positioned adjacent the free end **222.** Free end **222** is opposite the side of the distal portion **214** joined to proximal portion **212.** The mounting holes **220** are spaced apart. Mounting holes **220** are through holes.

Distal portion **214** is inclined relative to the proximal portion **212.** Distal portion **214** is inclined relative to the proximal portion **212** in a direction that the proximal portion **212** is inclined relative to the central body **204.** Distal portion **214** is substantially perpendicular to the central body **204.** Free end **222** is substantially parallel to a surface of the central body **204.**

The nozzle assembly **200** comprises a plurality of nozzle apparatuses **10.** The plurality of nozzles apparatuses **10** are radially disposed around the central axis **B.** The nozzle apparatuses **10** form an annulus around the central axis **B.** The nozzle apparatuses **10** form an annulus that is coaxial to the plurality of arms **210.** The plurality of nozzles apparatuses **10** are radially disposed around the aperture **206.** The laser beam passes within the annulus formed by the nozzle apparatuses **10.** The laser beam passes through the aperture **206.** Each nozzle apparatus **10** is mounted to the proximal portion **212** of each arm **210.**

The flange **48** of the nozzle apparatus **10** is mounted to the respective proximal portion **212.** Flange **48** has openings **224** for connection to the proximal portion **212.** Openings **224** are interspersed between the holes **53.** Openings **224** are through openings. Openings **224** are aligned to holes **218** on the proximal portion **212.** The first junction **22** extends through the arm opening **216.** The nozzle apparatus **10** extends from the proximal portion **212** towards the central axis **B.** Each nozzle apparatus **10** extends in a direction that the proximal portion **212** is inclined relative to the central body **204.** Each arm **210** is bent over the respective nozzle apparatus **10.**

The longitudinal axis **A** of each nozzle apparatus **10** is inclined relative to central axis **B.** The longitudinal axis **A** of each nozzle apparatus **10** is inclined relative to central axis **B** by an angle **δ** of between 5 and 85 degrees, preferably between 40 and 60 degrees. The longitudinal axis **A** of each nozzle apparatus **10** is substantially perpendicular to the respective proximal portion **212.** The longitudinal axis **A** of each nozzle apparatus **10** is inclined relative to the respective distal portion **214.**

The nozzle assembly **200** further comprises a base ring **226.** Base ring **226** has mounting projections **228** having mounting holes **230.** Distal portions **214** are mounted to the respective mounting projections **228.** Base ring **226** has a plurality of struts **232** interspersed between the plurality of arms **210.** Struts **232** serve for the connection of the nozzle assembly **200** to a machine for additive manufacturing.

The skilled person would appreciate that foregoing embodiments may be modified or combined to obtain the nozzle apparatus **10** of the present disclosure.

### Industrial Applicability

This disclosure describes a nozzle apparatus **10** for direct energy deposition applications. The nozzle apparatus **10** enables a reduced overall dimension while ensuring a set up on the deposition head when multiple nozzle nesting is required. The reduction in dimension does not hinder nesting of the continuous shielding gas passage **19** where the shielding gas flows.

The nozzle apparatus **10** enables transportation of deposit materials, such as powder, into an additive manufacturing process. The deposit material supply, such as the first junction **22,** feeds the powder to the nozzle apparatus **10,** in particular to the continuous deposit material passage **17.** The powder flows with a carrier gas, such Argon, through the continuous deposit material passage **17.**

The nozzle apparatus **10** also enables transportation of shielding gas into an additive manufacturing process. The shielding gas supply, such as the second junction **24,** feeds the shielding gas to the nozzle apparatus **10,** in particular to the continuous shielding gas passage **19.** The shielding gas flows through the continuous shielding gas passage **19.**

The powder generally diverges when exiting from the nozzle outlet **112,** due to the expansion of the carrier gas. In order to minimize this divergence, the shielding gas, which has greater velocity, wraps the carrier gas and the powder when exiting from the shroud outlet **138,** driving them along a desired direction and with a desired amplitude.

The nozzle apparatus **10** is modular. The various components of the nozzle apparatus **10** are independently replaceable. Worn components are replaceable without having to replace the entire nozzle apparatus **10.** The components of the nozzle apparatus **10** may be changed with similar parts that are modified for different function. The components may be optimized for specific applications. Rapid substitution of damaged or worn components is enabled due to the standard components utilization.

In addition, the nozzle apparatus **10** provides for rapid prototyping of the shroud nozzle **18.** During testing phase the shroud nozzle **18** can be changed in a rapid prototyping version, for example realized with polymeric 3D printing, allowing an extremely low cost testing campaign and process optimization, with significant reduction in time.

The nozzle assembly **200** provides for a radially spaced positioning of the independent nozzle apparatuses **10.** The radial distribution allows the utilization of each nozzle apparatus under a wide range of angles thereby avoiding powder distribution problems. Each nozzle apparatus **10** may have its own feeding system. This allows different settings fitting the process requirements and deposition strategy thereby drastically reducing the powders wasted. Each nozzle apparatus **10** may have its own shielding system provided by the shielding gas. This allows different settings fitting the process requirements and deposition strategy thereby drastically reducing the amount of gas wasted.

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

## Claims

1. A nozzle apparatus (10) for direct energy deposition applications, the nozzle apparatus
(10) being axially elongated along a longitudinal axis (A) and comprising:
a continuous deposit material passage (17) for conveying deposit material that has a central axis parallel or coincident to said longitudinal axis (A), the continuous deposit material passage (17) comprising an interface nozzle channel (42) and a nozzle channel (110) provided in a nozzle (16) to convey deposit material therethrough. wherein the nozzle channel (110) is contiguous with the interface nozzle channel (42); and
a continuous shielding gas passage (19) for conveying shielding gas, the continuous
shielding gas passage (19) comprising a shielding gas channel (58) and an annular shielding gas passage (20),
wherein the annular shielding gas passage (20) has a central axis that is parallel or coincident to said longitudinal axis (A) and communicates with the shielding gas channel (58) and wherein the annular shielding gas passage (20) surrounds the continuous deposit material passage (17),
**characterized in that** said annular shielding gas passage (20) has a shroud outlet (138) disposed at a distal shroud end (120) of a shroud nozzle (18), said shroud outlet (138) being formed between an outer edge of a distal nozzle end (100) of the nozzle (16) and an inner edge of the distal shroud end (120) as an annular ring through which the shielding gas exits axially and wraps the deposit material.

2. The nozzle apparatus (10) of claim 1 further comprising:
an interface nozzle (12) comprising a tube (26) and the interface nozzle channel (42) for conveying deposit material, the interface nozzle channel (42) being disposed in the tube (26) and being contiguous with an interface inlet (44) at a proximal tube end (28) of the tube (26);
an interface shroud (14) removably coupled to the interface nozzle (12) wherein the interface shroud (14) surrounds the tube (26), the interface shroud (14) having the shielding gas channel (58) for entry of shielding gas;
the nozzle (16) that is removably connected to a distal tube end (30) of the tube (26), the nozzle (16) having the nozzle channel (110) for conveying deposit material wherein the nozzle channel (110) has a nozzle outlet (112) at the distal nozzle end (100) of the nozzle(16); and
the shroud nozzle (18) that is removably connected to the distal end of the interface shroud (14), the shroud nozzle (18) surrounding the nozzle (16) wherein the annular shielding
gas passage (20) for conveying shielding gas is disposed between the shroud nozzle (18) and the nozzle (16)

3. The nozzle apparatus (10) of claim 2 wherein the tube (26) has an interface outlet (46) and a first bore (54) disposed at the distal tube end (30), the first bore (54) being interposed between the interface nozzle channel (42) and the interface outlet (46) wherein a proximal nozzle end (102) is removably inserted into the first bore (54) through the interface outlet (46).

4. The nozzle apparatus (10) of claims 2 or 3 wherein the nozzle channel (110) has a smaller
diameter relative to the interface nozzle channel (42), the nozzle channel (110) having a nozzle inlet (114) at a proximal end (102) of the nozzle (16) wherein the nozzle inlet (114) has the same diameter as the interface nozzle channel (42).

5. The nozzle apparatus (10) of claim 4 wherein a channel transition (116) is interposed
between the nozzle inlet (114) and the nozzle channel (110), the channel transition (116) decreases in diameter from the nozzle inlet (114) to the nozzle channel (110).

6. The nozzle apparatus (10) of claims 2 or 3 wherein the tube (26) has a second bore (56) disposed at the proximal tube end (28), the second bore (56) being
interposed between the interface inlet (44) and the interface nozzle channel (42) wherein a deposit material supply is removably connected to the second bore (56) through the interface inlet (44).

7. The nozzle apparatus (10) of claim 6 wherein the deposit material supply is a first junction (22) removably inserted into the second bore (56).

8. The nozzle apparatus (10) of any of claims 2-7 wherein the interface shroud (14) has a shroud inlet (70) wherein a shielding gas supply is removably connected to the shielding gas channel (58) through the shroud inlet (70).

9. The nozzle apparatus (10) of claim 8 wherein the shielding gas supply is a second standard junction (24) removably inserted into the shielding gas channel (58).

10. The nozzle apparatus (10) of any one of claims 2-9 wherein the interface shroud (14) has an interface shroud channel (72) having a first interface portion (74) proximally
positioned relative to a second interface portion (76), the first interface portion (74) having a greater diameter relative to the second interface portion (76) wherein the first interface portion (74) is radially spaced from the tube (26) and the second interface portion is in contact with the tube (26).

11. The nozzle apparatus (10) of claim 10 wherein the shroud nozzle (18) has a shroud nozzle channel (140) extending through a shroud base portion (128) and a shroud cone portion (126), the shroud cone portion (126) being distally positioned relative to the shroud base portion (128), the shroud cone portion (126) having a decreasing diameter from the shroud base portion (128) to the shroud outlet (138) wherein the shroud cone portion (126) is radially spaced from the nozzle (16) and the shroud base portion (128) is radially spaced from the tube (26).

12. The nozzle apparatus (10) of claim 11 wherein the annular shielding gas passage (20) extends from the shroud nozzle channel (140) to the first interface portion (74) of the interface shroud channel (72).

13. The nozzle apparatus (10) of any one of claims 2-12 wherein the annular shielding gas passage (20) is disposed between the internal surfaces (78, 142) of the interface shroud (14) and the shroud nozzle (18) and the external surfaces (32, 104) of the tube (26) and the nozzle (16).

14. The nozzle apparatus (10) of any one of claims 2-13 wherein a flange (48) extends radially from the tube (26), the interface shroud (14) being removably connected to the flange (48).

15. The nozzle apparatus (10) of claim 14 wherein a rim (130) extends radially from the shroud base portion (128) of the shroud nozzle (18), the rim (130) having holes (136) for removably connecting the shroud nozzle (18) to the flange (48).

16. The nozzle apparatus (10) of claims 14 or 15 wherein the flange (48) is positioned at the proximal tube end (28) of the tube (26).

17. A nozzle assembly (200) comprising:
a frame (200) having a central body (204), the central body (204) having a centrally disposed aperture (206) for the passage of a laser beam and a central axis (B) passing through the centre of the aperture (206);
a plurality of arms (210) extending from the central body (204), each arm (210) having a proximal portion (212) and a distal portion (214) wherein the proximal portion (212) is inclined relative to the central body (204) and the distal portion (214) inclined relative to the proximal portion (212);
a plurality of nozzle apparatuses (10) of any one of preceding claims, the plurality of nozzles apparatuses (10) being radially disposed around the central axis (B) wherein each nozzle apparatus (10) is mounted to a proximal portion (212) of each arm (210) and wherein the longitudinal axis (A) of each nozzle apparatus (10) is inclined relative to central axis (B).

18. The nozzle assembly (200) of claim 17 wherein the longitudinal axis (A) of each nozzle apparatus (10) is inclined relative to the central axis (B) by an angle (δ) of between 5 and 85 degrees.

## Patentansprüche

1. Eine Düsenvorrichtung (10) für Direct Energy Deposition-Anwendungen, wobei die Düsenvorrichtung (10) entlang einer Längsachse (A) axial langgestreckt ist und Folgendes umfasst:
einen Materialdurchgang (17) zum kontinuierlichen Auftragen, zum Befördern von Auftragsmaterial, der eine Mittelachse hat, die parallel zu der Längsachse (A) ist oder mit ihr zusammenfällt, wobei der Materialdurchgang (17) zum kontinuierlichen Auftragen einen Grenzflächendüsenkanal (42) und einen Düsenkanal (110) umfasst, angebracht in einer Düse (16), um Auftragsmaterial dort hindurch zu befördern, wobei der Düsenkanal (110) dem Grenzflächendüsenkanal (42) benachbart ist; und
einen durchgehenden Schutzgasdurchgang (19) zum Befördern von Schutzgas, wobei der durchgehende Schutzgasdurchgang (19) einen Schutzgaskanal (58) und einen ringförmigen Schutzgasdurchgang (20) umfasst;
wobei der ringförmige Schutzgasdurchgang (20) eine Mittelachse hat, die parallel zu der Längsachse (A) ist oder mit ihr zusammenfällt, und mit dem Schutzgaskanal (58) kommuniziert, und wobei der ringförmige Schutzgasdurchgang (20) den Materialdurchgang (17) zum kontinuierlichen Auftragen umgibt;
**dadurch gekennzeichnet, dass** der ringförmige Schutzgasdurchgang (20) einen Kragenauslass (138) hat, der an einem distalen Kragenende (120) einer Kragendüse (18) positioniert ist, wobei der Kragenauslass (138) zwischen einem äußeren Rand eines distalen Düsenendes (100) der Düse (16) und einem inneren Rand des distalen Kragenendes (120) als Kreisring geformt ist, durch welchen das Schutzgas axial austritt und das Auftragsmaterial umgibt.

2. Die Düsenvorrichtung (10) gemäß Anspruch 1, die weiter Folgendes umfasst:
eine Grenzflächendüse (12), die eine Röhre (26) und den Grenzflächendüsenkanal (42) zum Befördern von Auftragsmaterial umfasst, wobei der Grenzflächendüsenkanal (42) in der Röhre (26) angeordnet und einem Grenzflächeneinlass (44) an einem proximalen Röhrenende (28) der Röhre (26) benachbart ist;
einen Grenzflächenkragen (14), lösbar mit der Grenzflächendüse (12) gekoppelt, wobei der Grenzflächenkragen (14) die Röhre (26) umgibt, wobei der Grenzflächenkragen (14) den Schutzgaskanal (58) für den Eintritt von Schutzgas hat;
die Düse (16), die lösbar mit einem distalen Röhrenende (30) der Röhre (26) verbunden ist, wobei die Düse (16) den Düsenkanal (110) zum Befördern von Auftragsmaterial hat, wobei der Düsenkanal (110) einen Düsenauslass (112) am distalen Düsenende (100) der Düse (16) hat; und
die Kragendüse (18), die lösbar mit dem distalen Ende des Grenzflächenkragens (14) verbunden ist, wobei die Kragendüse (18) die Düse (16) umgibt, wobei der ringförmige Schutzgasdurchgang (20) zum Befördern von Schutzgas zwischen der Kragendüse (18) und der Düse (16) angeordnet ist.

3. Die Düsenvorrichtung (10) gemäß Anspruch 2, wobei die Röhre (26) einen Grenzflächenauslass (46) und eine erste Bohrung (54), angebracht am distalen Röhrenende (30), hat, wobei die erste Bohrung (54) zwischen dem Grenzflächendüsenkanal (42) und dem Grenzflächenauslass (46) angeordnet ist, wobei ein proximales Düsenende (102) durch den Grenzflächenauslass (46) lösbar in die erste Bohrung (54) eingeführt ist.

4. Die Düsenvorrichtung (10) gemäß den Ansprüchen 2 oder 3, wobei der Düsenkanal (110) einen kleineren Durchmesser hat als der Grenzflächendüsenkanal (42), wobei der Düsenkanal (110) einen Düseneinlass (114) an einem proximalen Ende (102) der Düse (16) hat, wobei der Düseneinlass (114) denselben Durchmesser hat wie der Grenzflächendüsenkanal (42).

5. Die Düsenvorrichtung (10) gemäß Anspruch 4, wobei ein Kanalübergang (116) zwischen dem Düseneinlass (114) und dem Düsenkanal (110) angeordnet ist, wobei der Durchmesser des Kanalübergangs (116) vom Düseneinlass (114) zum Düsenkanal (110) hin abnimmt.

6. Die Düsenvorrichtung (10) gemäß den Ansprüchen 2 oder 3, wobei die Röhre (26) eine zweite Bohrung (56) hat, die am proximalen Röhrenende (28) angeordnet ist, wobei die zweite Bohrung (56) zwischen dem Grenzflächeneinlass (44) und dem Grenzflächendüsenkanal (42) positioniert ist, wobei eine Auftragsmaterialzufuhr durch den Grenzflächeneinlass (44) lösbar mit der zweiten Bohrung (56) verbunden ist.

7. Die Düsenvorrichtung (10) gemäß Anspruch 6, wobei die Auftragsmaterialzufuhr eine erste Verbindung (22) ist, welche lösbar in die zweite Bohrung (56) eingeführt ist.

8. Die Düsenvorrichtung (10) gemäß einem beliebigen der Ansprüche 2-7, wobei der Grenzflächenkragen (14) einen Krageneinlass (70) hat, wobei eine Schutzgaszufuhr durch den Krageneinlass (70) lösbar mit dem Schutzgaskanal (58) verbunden ist.

9. Die Düsenvorrichtung (10) gemäß Anspruch 8, wobei die Schutzgaszufuhr eine zweite Standardverbindung (24) ist, die lösbar in den Schutzgaskanal (58) eingesetzt ist.

10. Die Düsenvorrichtung (10) gemäß einem beliebigen der Ansprüche 2-9, wobei der Grenzflächenkragen (14) einen Grenzflächenkragenkanal (72) mit einem ersten Grenzflächenabschnitt (74), proximal zu einem zweiten Grenzflächenabschnitt (76) positioniert, hat; wobei der erste Grenzflächenabschnitt (74) einen größeren Durchmesser als der zweite Grenzflächenabschnitt (76) hat, wobei der erste Grenzflächenabschnitt (74) radial von der Röhre (26) beabstandet ist und der zweite Grenzflächenabschnitt in Kontakt mit der Röhre (26) steht.

11. Die Düsenvorrichtung (10) gemäß Anspruch 10, wobei die Kragendüse (18) einen Kragendüsenkanal (140) hat, der sich durch einen Kragenbasisabschnitt (128) und einen Kragenkegelabschnitt (126) erstreckt, wobei der Kragenkegelabschnitt (126) distal zum Kragenbasisabschnitt (128) positioniert ist, wobei der Kragenkegelabschnitt (126) einen vom Kragenbasisabschnitt (128) zum Kragenauslass (138) abnehmenden Durchmesser hat, wobei der Kragenkegelabschnitt (126) radial von der Düse (16) beabstandet ist und der Kragenbasisabschnitt (128) radial von der Röhre (26) beabstandet ist.

12. Die Düsenvorrichtung (10) gemäß Anspruch 11, wobei der ringförmige Schutzgasdurchgang (20) sich vom Kragendüsenkanal (140) zum ersten Grenzflächenabschnitt (74) des Grenzflächenkragenkanals (72) erstreckt.

13. Die Düsenvorrichtung (10) gemäß einem beliebigen der Ansprüche 2-12, wobei der ringförmige Schutzgasdurchgang (20) zwischen den Innenflächen (78, 142) des Grenzflächenkragens (14) und der Kragendüse (18) und den Außenflächen (32, 104) der Röhre (26) und der Düse (16) angeordnet ist.

14. Die Düsenvorrichtung (10) gemäß einem beliebigen der Ansprüche 2-13, wobei ein Flansch (48) sich radial von der Röhre (26) erstreckt, wobei der Grenzflächenkragen (14) lösbar mit dem Flansch (48) verbunden ist.

15. Die Düsenvorrichtung (10) gemäß Anspruch 14, wobei ein Rand (130) sich radial vom Kragenbasisabschnitt (128) der Kragendüse (18) erstreckt, wobei der Rand (130) Löcher (136) zur lösbaren Verbindung der Kragendüse (18) mit dem Flansch (48) hat.

16. Die Düsenvorrichtung (10) gemäß den Ansprüchen 14 oder 15, wobei der Flansch (48) am proximalen Röhrenende (28) der Röhre (26) positioniert ist.

17. Ein Düsenaufbau (200), der Folgendes umfasst:
einen Rahmen (200) mit einem zentralen Körper (204), wobei der zentrale Körper (204) eine zentral angebrachte Öffnung (206) für das Hindurchdringen eines Laserstrahls und eine Mittelachse (B) hat, die durch die Mitte der Öffnung (206) verläuft;
eine Vielzahl von Armen (210), die sich vom zentralen Körper (204) erstrecken, wobei jeder Arm (210) einen proximalen Abschnitt (212) und einen distalen Abschnitt (214) hat, wobei der proximale Abschnitt (212) relativ zum zentralen Körper (204) geneigt ist und der distale Abschnitt (214) relativ zum proximalen Abschnitt (212) geneigt ist;
eine Vielzahl von Düsenvorrichtungen (10) gemäß einem beliebigen der obigen Ansprüche, wobei die Vielzahl von Düsenvorrichtungen (10) radial um die Mittelachse (B) herum angeordnet ist, wobei jede Düsenvorrichtung (10) an einem proximalen Abschnitt (212) jedes Arms (210) montiert ist und wobei die Längsachse (A) jeder Düsenvorrichtung (10) im Verhältnis zur Mittelachse (B) geneigt ist.

18. Der Düsenaufbau (200) gemäß Anspruch 17, wobei die Längsachse (A) jeder Düsenvorrichtung (10) im Verhältnis zur Mittelachse (B) in einem Winkel (δ) zwischen 5 und 85 Grad geneigt ist.

## Revendications

1. Dispositif à buse (10) pour applications de dépôt sous énergie concentrée, le dispositif à buse (10) ayant une forme allongée axialement le long d'un axe longitudinal (A) et comprenant :
un passage de matériau de dépôt continu (17) pour amener un matériau de dépôt qui a un axe central parallèle ou coïncidant avec ledit axe longitudinal (A), le passage de matériau de dépôt continu (17) comprenant un canal de buse d'interface (42) et un canal de buse (110) formé dans une buse (16) pour permettre le passage de matériau de dépôt, le canal de buse (110) étant contigu au canal de buse d'interface (42) ; et
un passage de gaz protecteur continu (19) pour amener un gaz protecteur, le passage de gaz protecteur continu (19) comprenant un canal de gaz protecteur (58) et un passage de gaz protecteur annulaire (20),
dans lequel le passage de gaz protecteur annulaire (20) a un axe central qui est parallèle ou coïncide avec ledit axe longitudinal (A) et communique avec le canal de gaz protecteur (58) et dans lequel le passage de gaz protecteur annulaire (20) entoure le passage de matériau de dépôt continu (17),
**caractérisé en ce que** ledit passage de gaz protecteur annulaire (20) comporte une sortie d'enveloppe (138) placée à une extrémité d'enveloppe distale (120) d'une buse d'enveloppe (18), ladite sortie d'enveloppe (138) étant formée entre un bord extérieur d'une extrémité de buse distale (100) de la buse (16) et un bord intérieur de l'extrémité d'enveloppe distale (120) sous la forme d'une bague annulaire à travers laquelle le gaz protecteur sort axialement et enveloppe le matériau de dépôt.

2. Dispositif à buse (10) selon la revendication 1, comprenant en outre :
une buse d'interface (12) comprenant un tube (26) et le canal de buse d'interface (42) pour amener le matériau de dépôt, le canal de buse d'interface (42) étant placé dans le tube (26) et étant contigu à une entrée d'interface (44) au niveau d'une extrémité de tube proximale (28) du tube (26) ;
une enveloppe d'interface (14) accouplée de manière amovible à la buse d'interface (12), dans lequel l'enveloppe d'interface (14) entoure le tube (26), l'enveloppe d'interface (14) ayant le canal de gaz protecteur (58) pour l'entrée du gaz protecteur ;
la buse (16) qui est connectée de manière amovible à une extrémité de tube distale (30) du tube (26), la buse (16) ayant le canal de buse (110) pour amener le matériau de dépôt, le canal de buse (110) ayant une sortie de buse (112) à l'extrémité de buse distale (100) de la buse (16) ; et
la buse d'enveloppe (18) qui est connectée de manière amovible à l'extrémité distale de l'enveloppe d'interface (14), la buse d'enveloppe (18) entourant la buse (16), dans lequel le passage de gaz protecteur annulaire (20) pour amener du gaz protecteur est placé entre la buse d'enveloppe (18) et la buse (16).

3. Dispositif à buse (10) selon la revendication 2, dans lequel le tube (26) a une sortie d'interface (46) et un premier alésage (54) situé à l'extrémité de tube distale (30), le premier alésage (54) étant intercalé entre le canal de buse d'interface (42) et la sortie d'interface (46), dans lequel une extrémité de buse proximale (102) est insérée de façon amovible dans le premier alésage (54) à travers la sortie d'interface (46).

4. Dispositif à buse (10) selon la revendication 2 ou 3, dans lequel le canal de buse (110) a un plus petit diamètre que le canal de buse d'interface (42), le canal de buse (110) ayant une entrée de buse (114) à une extrémité proximale (102) de la buse (16), l'entrée de buse (114) ayant le même diamètre que le canal de buse d'interface (42).

5. Dispositif à buse (10) selon la revendication 4, dans lequel une transition de canal (116) est intercalée entre l'entrée de buse (114) et le canal de buse (110), le diamètre de la transition de canal (116) diminuant de l'entrée de buse (114) au canal de buse (110).

6. Dispositif à buse (10) selon la revendication 2 ou 3, dans lequel le tube (26) a un deuxième alésage (56) placé à l'extrémité de tube proximale (28), le deuxième alésage (56) étant intercalé entre l'entrée d'interface (44) et le canal de buse d'interface (42), dans lequel une alimentation en matériau de dépôt est connectée de manière amovible au deuxième alésage (56) à travers l'entrée d'interface (44).

7. Dispositif à buse (10) selon la revendication 6, dans lequel l'alimentation en matériau de dépôt est un premier raccord (22) inséré de façon amovible dans le deuxième alésage (56).

8. Dispositif à buse (10) selon l'une quelconque des revendications 2 à 7, dans lequel l'enveloppe d'interface (14) a une entrée d'enveloppe (70), dans lequel une alimentation en gaz protecteur est connectée de façon amovible au canal de gaz protecteur (58) à travers l'entrée d'enveloppe (70).

9. Dispositif à buse (10) selon la revendication 8, dans lequel l'alimentation en gaz protecteur est un deuxième raccord standard (24) inséré de façon amovible dans le canal de gaz protecteur (58).

10. Dispositif à buse (10) selon l'une quelconque des revendications 2 à 9, dans lequel l'enveloppe d'interface (14) a un canal d'enveloppe d'interface (72) ayant une première partie d'interface (74) positionnée de façon proximale par rapport à une deuxième partie d'interface (76), la première partie d'interface (74) ayant un plus grand diamètre que la deuxième partie d'interface (76), dans lequel la première partie d'interface (74) est espacée radialement par rapport au tube (26) et la deuxième partie d'interface est en contact avec le tube (26).

11. Dispositif à buse (10) selon la revendication 10, dans lequel la buse d'enveloppe (18) a un canal de buse d'enveloppe (140) qui s'étend à travers une partie de base d'enveloppe (128) et une partie de cône d'enveloppe (126), la partie de cône d'enveloppe (126) étant positionnée de manière distale par rapport à la partie de base d'enveloppe (128), le diamètre de la partie de cône d'enveloppe (126) diminuant de la partie de base d'enveloppe (128) à la sortie d'enveloppe (138), dans lequel la partie de cône d'enveloppe (126) est espacée radialement par rapport à la buse (16) et la partie de base d'enveloppe (128) est espacée radialement par rapport au tube (26).

12. Dispositif à buse (10) selon la revendication 11, dans lequel le passage de gaz protecteur annulaire (20) s'étend du canal de buse d'enveloppe (140) à la première partie d'interface (74) du canal d'enveloppe d'interface (72).

13. Dispositif à buse (10) selon l'une quelconque des revendications 2 à 12, dans lequel le passage de gaz protecteur annulaire (20) est placé entre les surfaces intérieures (78, 142) de l'enveloppe d'interface (14) et de la buse d'enveloppe (18) et les surfaces extérieures (32, 104) du tube (26) et de la buse (16).

14. Dispositif à buse (10) selon l'une quelconque des revendications 2 à 13, dans lequel une bride (48) s'étend radialement depuis le tube (26), l'enveloppe d'interface (14) étant connectée de façon amovible à la bride (48).

15. Dispositif à buse (10) selon la revendication 14, dans lequel un rebord (130) s'étend radialement depuis la partie de base d'enveloppe (128) de la buse d'enveloppe (18), le rebord (130) comportant des trous (136) pour fixer de façon amovible la buse d'enveloppe (18) sur la bride (48).

16. Dispositif à buse (10) selon la revendication 14 ou 15, dans lequel la bride (48) est positionnée à l'extrémité de tube proximale (28) du tube (26).

17. Ensemble de buse (200) comprenant :
un châssis (200) ayant un corps central (204), le corps central (204) comportant une ouverture disposée de façon centrale (206) pour le passage d'un faisceau laser et un axe central (B) qui passe par le centre de l'ouverture (206) ;
une pluralité de bras (210) s'étendant depuis le corps central (204), chaque bras (210) ayant une partie proximale (212) et une partie distale (214), dans lequel la partie proximale (212) est inclinée par rapport au corps central (204) et la partie distale (214) est inclinée par rapport à la partie proximale (212) ;
une pluralité de dispositifs à buse (10) selon l'une quelconque des revendications précédentes, les dispositifs à buse (10) étant disposés radialement autour de l'axe central (B), dans lequel chaque dispositif à buse (10) est monté sur une partie proximale (212) de chaque bras (210) et dans lequel l'axe longitudinal (A) de chaque dispositif à buse (10) est incliné par rapport à l'axe central (B).

18. Ensemble de buse (200) selon la revendication 17, dans lequel l'axe longitudinal (A) de chaque dispositif à buse (10) est incliné par rapport à l'axe central (B) d'un angle (δ) compris entre 5 et 85 degrés.
